# DEMANDE DE BREVET EUROPEEN

(11) **EP 0 925 962 A1**
(43) Date de publication de la demande: **30.06.1999**
(21) Numéro de dépôt: 98490037.3
(22) Date de dépôt: 10.12.1998
(51) Int. Cl.: B60D 1/173, B60D 1/06

(54) **Timon articulé polyvalent de remorque**

(30) Priorité: 16.12.1997 FR 9716208
(71) Demandeur: Woestelandt, Emile, F-59370 Mons en Baroeul (FR)
(72) Inventeur: Woestelandt, Emile, F-59370 Mons en Baroeul (FR)

(57) **Abrégé**

L'invention concerne un timon d'attelage d'une remorque sur un véhicule, capable de solutionner globalement tous leurs rapports dynamiques, roulis, tangage, lacet, suspension. Il comporte deux brancards élastiques anti-affaissement (4) qui, agencés comme un trapèze isocèle déformable, sont articulés à chacune de leurs extrémités, respectivement, avec la petite base (2) du trapèze, solidaire du tracteur, et avec la grande base (3) solidaire de la remorque. Ce timon est caractérisé en ce qu'il comprend des moyens, d'une part, pour articuler l'attelage, soit exclusivement autour des deux sommets antérieurs du trapèze, soit non exclusivement autour d'un seul sommet central, selon que l'angle de virage est plus petit ou plus grand qu'un angle prédéterminé, et d'autre part pour assurer un accouplement spécifique compatible avec la rotule classique, grâce à une boite de transfert.

## Description

La présente invention concerne un timon d'attelage d'une remorque et d'un vehicule-tracteur.

Classiquement le timon d'une remorque est constitué par deux brancards rigides disposés en triangle, dont la base est solidaire de la remorque et le sommet, du véhicule tracteur, grâce à une rotule.

Ce dispositif est responsable d'un phénomène redoutable appelé "mise-en-lacet". Il s'explique par la projection latérale qu'exerce au niveau de la rotule le porte-à-faux arrière du véhicule tracteur, projection alternative et d'amplitude croissante. Il s'y ajoute un autre phénomène, c'est le ripage de la remorque en trajectoire sinueuse qui, aggravé par la hauteur du centre de gravité, provoque immanquablement le renversement de la remorque.

Il est remarquable en outre que, soit un souffle latéral tel que produit par le vent ou le passage d'un poids-lourd, soit une certaine vitesse, pas forcément excessive, soit une descente ou un coup de frein, contribuent indépendamment et surtout en association au même phénomène.

Il est enfin certain qu'indépendamment de tout ceci, à un certaine vitesse, la "mise-en- lacet" s'opère inévitablement, de façon apparemment spontanée.

Un autre défaut du timon rigide est de contrarier les débattements verticaux respectifs des deux véhicules, ce qui est aberrant en mécanique, puisque responsable de rupture, et déplorable pour le confort.

Pour y remédier, différents systèmes sont proposés, mais qui ne visent qu'à atténuer de façon univoque, des effets, sans éliminer les causes, et ne sont pas démunis de conséquences néfastes. Des résultats remarquables sont obtenus, cependant, avec le timon articulé déformable en forme de trapèze isocèle.

Ce timon est constitué par deux brancards horizontaux non parallèles, articulés en avant à un élément constituant sa petite base, laquelle est fixée à l'arrière du véhicule tracteur, parallèlement à son axe transversal, et en arrière, à une traverse de la remorque, constituant sa grande base. Il a pour effet d'amener virtuellement le centre de pivotement des véhicules associés, à l'aplomb du centre de l'essieu arrière du véhicule tracteur, et de neutraliser le levier que représente le porte-à-faux arrière du tracteur, générateur du lacet incriminé.

Malheureusement, un tel dispositif présente l'inconvénient d'imposer à la remorque une trajectoire plus serrée que celle du tracteur, dans les virages, avec risque d'accrochage. Il est donc nécessaire, à partir de ce timon, d'en limiter l'action aux trajectoires faiblement sinueuses, seules compatibles à grande vitesse, et revenir au principe de la rotule classique, dans les virages plus importants, hors risque de lacet, car à vitesse réduite.

Ceci est obtenu par un dispositif capable de transformer progressivement le timon trapèze en timon triangle, par réduction de longueur de la petite base du trapèze. Ce système très efficace, présente quelques difficultés de réalisation et de structure et améliore insuffisamment la trajectoire de la remorque, en virage moyen.

La présente invention se rapporte à un timon capable d'obtenir des résultats meilleurs grâce à des structures différentes simplifiées, et à un principe différent, et en outre, possède des moyens de résoudre globalement et synthétiquement, comme il se doit, l'ensemble des problèmes de remorquage.

A cet effet, l'invention a pour objet un tel timon d'attelage d'une remorque à un véhicule tracteur, du type dit "en trapèze" c'est à dire comprenant deux brancards qui sont articulés à chacune de leurs extrémités avec la petite base et la grande base du dit trapèze, lesquelles bases sont respectivement et au moins indirectement solidaires, l'une du véhicule tracteur et l'autre du châssis de la remorque, ce timon étant notamment caractérisé en ce qu'il comprend les moyens pour amener séquentiellement et effectivement l'articulation d'attelage à se produire soit exclusivement au niveau des deux sommets antérieurs du trapèze, soit exclusivement ou non, au niveau de la rotule classique, ou d'un axe vertical équivalent s'y substituant, selon que l'axe médian longitudinal de la remorque et celui du tracteur se trouvent en deçà ou au delà d'un angle pré déterminé, dit angle de virage.

La description ci-après, faite à titre d'exemple non limitatif permet de comprendre l'invention, grâce aux dessins ci-joints.

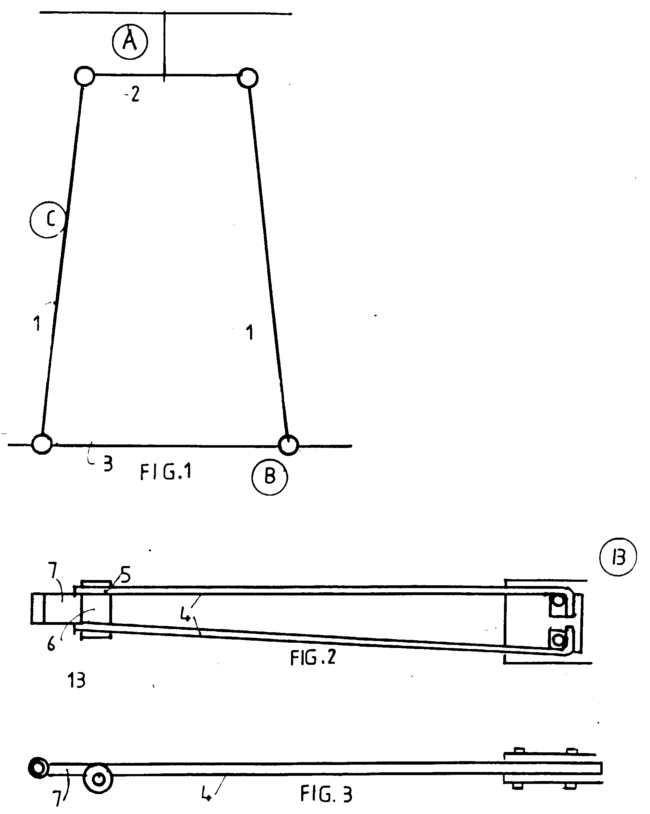

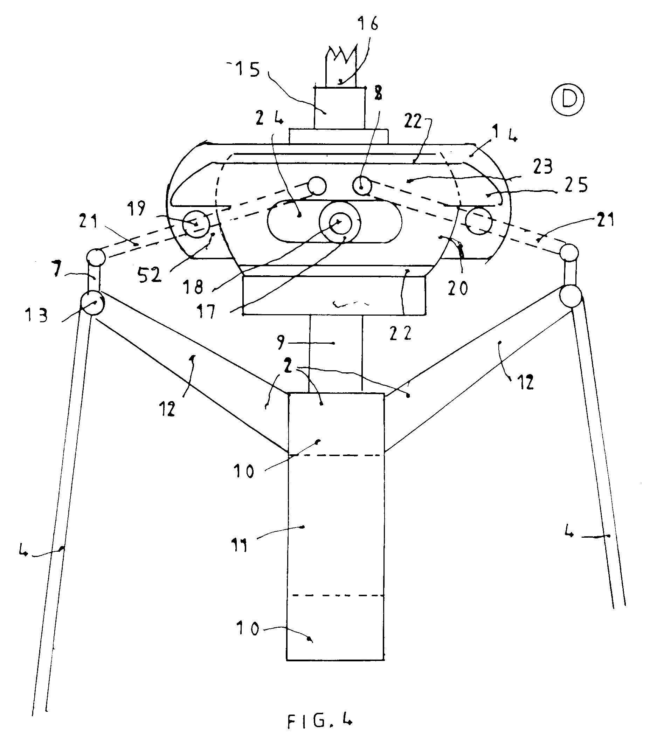

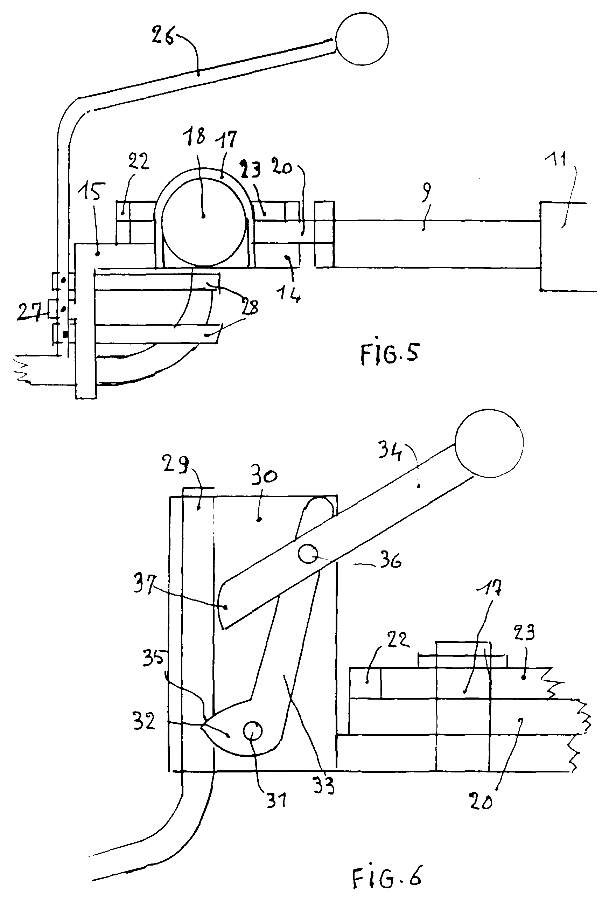

La figure 1 montre que le véhicule tracteur A est attelé à une remorque B par l'intermédiaire d'un timon articulé C dont une extrémité est solidaire du châssis de la remorque et dont l'autre extrémité est associée à un point d'ancrage fixé à l'arrière du véhicule tracteur.

Classiquement le timon C comporte deux brancards (l) disposés en trapèze isocèle déformable, articulés à chacune de leurs extrémités avec la petite base (2) et la grande base (3) du trapèze étant respectivement et au moins indirectement solidaires, l'une du véhicule tracteur, et l'autre du châssis de la remorque. Chaque brancard est constitué classiquement par une lame de ressort terminée à chaque extrémité par une boucle à axe vertical et doublement vrillée de façon à comporter un segment postérieur de chant et un segment antérieur à plat.

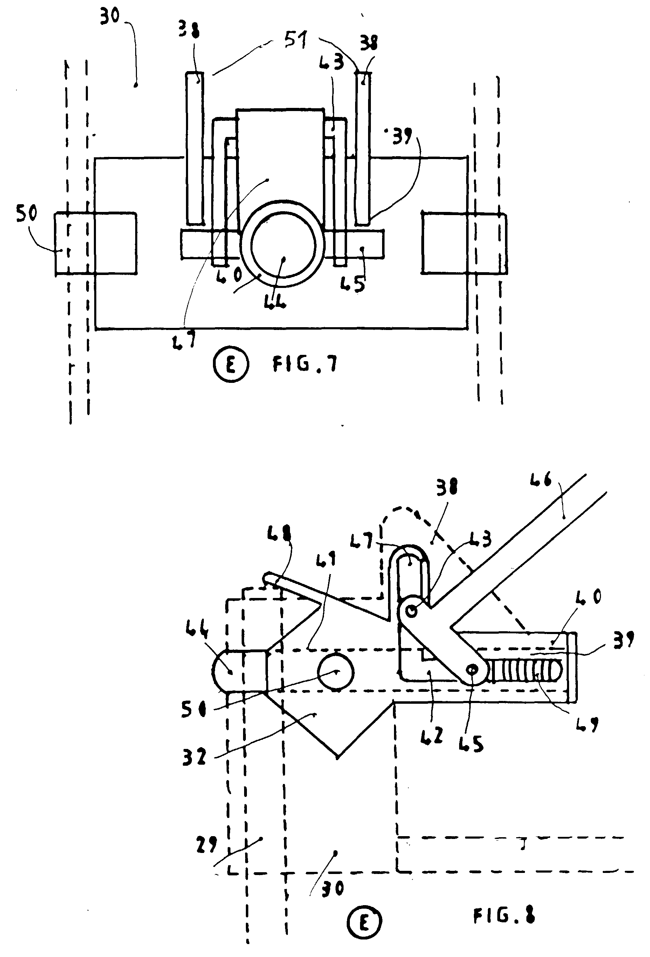

Selon une caractéristique essentielle de l'invention concrétisée dans les figures 1, 2, 3, les brancards sont constitués, chacun, par deux barres de torsion (4) non parallèles, disposées dans un plan vertical et plus proches l'une de l'autre en avant qu'en arrière et terminées en avant par une boucle (5) à axe vertical sertie sur un manchon commun (6) et en arrière, fixées au châssis de la remorque de façon (de préférence) à ne pas pouvoir subir de mouvements de rotation ou de translation. Le manchon (6) coopère avec un levier (7) dirigé en avant et destiné à actionner le verrou (23) du bloc-transfert D (Fig. 4).

La constitution des bras permet d'assurer et de contrôler le roulis et le tangage qui ne sont plus assurés par la rotule. Elle permet en outre, de doter l'attelage d'une suspension par cisaillement élastique, sensiblement améliorée du fait que les deux barres de chaque brancard ne sont pas parallèles. Ceci a pour effet de moduler de façon progressive, l'élasticité du timon, de l'arrière vers l'avant et d'éviter l'affaissement intempestif de l'attelage en certaines circonstances. Ces brancards élastiques éliminent en outre les inconvénients que comporterait une rigidité absolue du couple véhicule et tracteur, toujours susceptible de rupture.

Comme de manière classique, le timon comporte un système de freinage par inertie composé d'un barreau coulissant (9) maintenu dans des coulisses antérieure et postérieure (10), lesquelles sont fixées dans un carter (l1).

Selon une caractéristique essentielle de l'invention, le barreau coulissant coopère en avant avec la glissière (20) du crochet d'attelage (15) et comporte un moyen l'empêchant de pivoter dans les coulisses (10) (non représenté) Fig.4.

De la même manière, le carter coopère de chaque côté et en avant avec deux bras (12) qui y sont fixés de façon rigide et constante, et dirigés en dehors et en avant symétriquement. Ces bras comportent à leur extrémité distale un moyen de pivotement vertical avec les extrémités antérieures (13) des brancards (4), en l'occurrence une chape. Ces deux bras (12) et le carter (11) constituent la petite base (2) non modifiable du trapèze et coopèrent avec l'arrière du véhicule tracteur, par l'intermédiaire du crochet d'attelage (15).

Classiquement la rotule d'attelage n'est pas compatible avec le timon articulé, car il faut que la petite base du trapèze coopère avec l'arrière du véhicule tracteur de façon que son axe transversal demeure parallèle à celui du tracteur.

Selon une caractéristique de l'invention, la rotule est maintenue et le timon comporte des moyens pour modifier les rapports unissant sa petite base (2) et l'arrière du véhicule tracteur.

Ces moyens coopèrent par l'intermédiaire de la rotule, ou d'un axe qui lui est substitué, soit pour maintenir la petite base (2) du trapèze strictement parallèle à l'axe transversal du tracteur, soit pour lui permettre sa rotation autour de la rotule ou d'un axe de substitution.

Selon l'invention ces moyens sont obtenus grâce à une boite de transfert (D). Cette boite de transfert comporte selon une première caractéristique, en se référant à la figure 4.
1° Un socle (14) comportant en avant un crochet d'attelage (15) et destiné à s'insérer sur le col-de-cygne (16) de la rotule d'attelage (18), à la manière d'une fourche, au centre, un axe tubulaire vertical (17) destiné à coiffer la rotule à travers une lumière et de chaque côté un guide de gache (19).
2° Une glissière (20) s'appuyant sur le socle et coopérant de façon constante et rigide avec la remorque, en particulier avec l'extrémité antérieure du barreau coulissant (9) et qui comporte une lumière destinée à pivoter autour de l'axe central du socle (17) et des rampes (22) antérieures et postérieures, parallèles et saillant sur sa face supérieure.
3° Un verrou (23) coopérant par translation avec la glissière, entre les rampes (22) et autour de l'axe tubulaire (17) du socle, grâce à une lumière oblongue (24) de longueur déterminée. Il possède de chaque côté une échancrure postérieure (52) permettant d'y délimiter un pène (25) dont le bord coulisse contre le guide de gâche correspondant.

Le verrou (23) coopère avec le socle (14) contre les guides de gâche (19).

La translation du verrou (23) permet à la glissière de se libérer alternativement d'un côté ou de l'autre, selon la position respective du pène (25), par rapport aux guides de gache (19) du socle, et de pouvoir pivoter alternativement autour de l'axe vertical (17). Ce verrou comporte un ou deux manetons (8) à sa partie centrale et antérieure, sur lesquels agissent en poussée et (ou) en traction les cames (7) des brancards, par l'intermédiaire de poussoirs (21) . Les pènes ont une largeur telle qu'il leur soit impossible de dépasser les guides de gache (19) et ainsi provoquer un reverrouillage intempestif.

Un certain jeu axial accorde aux poussoirs (21) une latence d'action déterminée.

Le verrou peut comporter un système de crémaillère de recentrage coopérant avec l'axe tubulaire (17), et (ou) des ressorts de rappel de recentrage (non représentés.

Le timon permet au véhicule tracteur et à la remorque de s'articuler sur l'axe tubulaire central (17) pouvant se confondre avec la rotule classique ou bien autour de deux axes antérieurs, selon l'axe de virage, ceci étant facilité par la résistance élastique qu'opposent les deux brancards du fait de leur fixation rigide au châssis de la remorque.

Selon la figure (5) le crochet d'attelage (15) coopère avec un levier dit levier de verrouillage (26) autour de l'axe transversal (27) permettant à ce levier de basculer d'avant en arrière. Ce levier entraîne schématiquement au dessus et au dessous de cet axe deux anses (28). Selon l'invention le levier de verrouillage (26) amène l'anse inférieure à enserrer le col de cygne, sous la rotule, dans sa courbure concave en avant, et l'anse supérieure à repousser le col de cygne dans sa courbure inversée donc concave en arrière. On comprend que lorsque le levier (26) est actionné les anses (28) se déplacent en sens inverse l'une par rapport à l'autre, en serrant ou libérant le col de cygne à la manière d'une pince. En réalité, le levier de verrouillage (26) est dédoublé de façon à encadrer le crochet d'attelage (15).

Selon un autre mode de réalisation de l'invention, la rotule d'attelage peut être remplacée par un élément interdisant toute rotation, telle qu'une plaque, appelée plaque d'ancrage (29). Cette plaque coopère avec le véhicule tracteur de la même façon que la ferrure classique à rotule et col de Cygne. La plaque d'ancrage est verticale et de préférence transversale et peut être légèrement pyramidale. Elle est destinée à s'insérer dans une cage (30) qui selon l'invention se substitue au crochet d'attelage (15).

Selon l'invention cette cage (30) est un tube rectangulaire dont la largeur est plus importante que l'épaisseur, eue peut être légèrement pyramidale et le grand axe de sa lumière est vertical afin de pouvoir coopérer avec la plaque d'ancrage (29). Se substituant au crochet d'attelage (15), la cage (30) coopère avec le socle (14).

Selon l'invention, le dispositif comporte des moyens pour obtenir un serrage et un ancrage de la plaque (29) dans la cage (30). Ces moyens, selon la figure (6) consistent en un élément excentrique transversal (32) pivotant en (31) dans la partie inférieure de la cage dont elle occupe toute la largeur, de façon à ménager devant elle un espace suffisant pour l'introduction de la plaque(29) et à pouvoir dans un second temps serrer cette plaque contre la paroi de la cage grâce à sa partie saillante. La plaque (29) peut comporter une gouttière transversale (35) de rétention et d'extraction coopérant avec l'arrête saillante de l'élément excentrique (32).

Selon l'invention le mouvement de l'élément excentrique (32) est commandé par un bras (33) qui lui est intégré et qui est articulé en (36) au levier (34) agissant à partir de l'axe (36) comme un pied-de-biche, son extrémité (37) s'appuyant sur la partie supérieure de la plaque d'ancrage (29). Un verrouillage de sécurité à cliquet de préférence, assujettit le levier (34) (non représenté).

Selon l'invention les moyens pour obtenir le serrage et l'ancrage de la plaque d'ancrage (29) dans la cage (30) peuvent être réalisés de la façon suivante, selon une autre option (fig.7 et 8).

La cage (30) présente une échancrure (51) dans sa partie postéro-supérieure, délimitée de chaque côté par une aile (38) ces ailes qui sont parallèles et verticales comportent un bord inférieur (39) horizontale au même niveau. Cette échancrure est occupée par le bloc de verrouillage (E).

Selon l'invention, celui-ci. comporte un élément excentrique (32) transversal pivotant en (50) et se prolongeant en arrière en son milieu par un tube cylindrique perpendiculairement à son grand axe (40). L'élément excentrique (32) est percée d'un canal (41) faisant suite à la lumière du tube (40). Le tube (40) présente une glissière bilatérale (42) selon son grand axe.

Dans le canal (41) coulisse un verrou (44) et son ressort de rappel (49). Le verrou présente à son extrémité postérieure une broche (45) coulissant de chaque côté dans la glissière (42) du tube (40).

Selon l'invention l'élément excentrique (32) comporte en outre une glissière (47) à axe transversal positionnée transversalement à la racine du tube (40). Un levier de commande (46) comporte à sa partie proximale une pince enserrant en même temps les deux glissières (42) et (47), occupant la glissière (47) avec sa broche transversale (43) et coopérant avec la broche (45) du verrou (44). Cette broche (45) est capable de coulisser sur les bords inférieurs (39) des ailes (38). Fig.7.

On comprend que l'élévation du levier de commande (46), dans un premier temps a pour effet d'abaisser conjointement la broche (43) et de reculer la broche (45) grâce au guidage assuré par le bord (39. Il s'en suit la libération du verrou (44).

On comprend de même que dans un second temps l'élévation du levier de commande (46) par suite du coulissement de la broche (45) sur le bord postérieur des ailes (38) entraîne le pivotement du bloc de verrouillage (E) autour des axes (50) et donc la désolarisation de la cage (30) et de la plaque d'ancrage (29).

Selon l'invention une visière (48) prolongeant en avant le bord supérieur de l'élément excentrique (32) en prenant appui sur le bord supérieur de la plaque d'ancrage (29) facilite le dételage.

L'exposé qui précède permet de comprendre le fonctionnement du système et la justification des moyens associés obligatoires. En effet le problème du remorquage soulève des problèmes antagonistes trop complexes pour être traités séparément.

## Revendications

1. Timon d'attelage d'une remorque (A) sur un véhicule (B) comprenant deux brancards (l) qui, agencés à la manière d'un trapèze isocèle déformable, sont articulés à chacune de leurs extrémités, avec la petite base (2) et la grande base (3) du trapèze, lesquelles sont respectivement et au moins indirectement solidaires l'un du véhicule tracteur et l'autre du châssis de la remorque,
Ce timon étant caractérisé en ce qu'il comprend les moyens pour articuler l'attelage, soit exclusivement autour des deux sommets antérieurs du trapèze (13), soit non exclusivement autour d'un sommet central unique (17), lorsque, dans un virage, l'axe longitudinal du véhicule tracteur forme avec l'axe longitudinal de la remorque un angle plus grand que l'angle de virage prédéterminé.

2. Timon selon la revendication l caractérisé en ce que, pour constituer les moyens de substituer ses deux axes de pivotement antérieurs à un seul axe central, et réciproquement, il dispose d'une boite de transfert. (fig.4).

3. Timon selon la revendication 2 caractérisé en ce que la boite de transfert comporte d'une part un socle (14) solidaire du véhicule tracteur, d'autre part une glissière (20) solidaire de la remorque, enfin un verrou (23) pour libérer ou subordonner le socle et la glissière.

4. Timon selon la revendication 3 caractérisé en ce que le socle (14) comporte un axe tubulaire vertical central (17) destiné à coiffer la rotule d'attelage classiques à travers une lumière.

5. Timon selon la revendication 3 caractérisé en ce que le socle (14) comporte un crochet d'attelage(15) destiné à enserrer à la façon d'une fourche le col de cygne (ainsi nommé classiquement) appartenant au véhicule tracteur.

6. Timon selon la revendication 5 caractérisé en ce que le crochet d'attelage coopère avec un levier dit levier de verrouillage (26), autour de l'axe transversal (27) permettant à ce levier de basculer d'avant à l'arrière, ce levier entraînant au dessus et en dessous de cet axe deux anses (28), le mouvement du levier (26) amenant schématiquement les anses à enserrer ou à libérer le col de cygne, l'anse supérieure ayant sa courbure inversée.

7. Timon selon la revendication 4 caractérisé en ce que la boite de transfert comporte une glissière (20) pivotant sur l'axe tubulaire vertical (17) par sa lumière et comportant des rampes antérieure et postérieure parallèles (22). La glissière coopérant de façon rigide avec l'extrémité antérieure d'un barreau coulissant (9).

8. Timon selon la revendication 7 caractérisé en ce que la boite de transfert comporte un verrou (23) coopérant avec la glissière ( 20) entre les rampes (22) et avec le socle ( 14) contre des guides de gache (19), Le verrou comportant une lumière oblongue lui permettant de coulisser autour de l'axe tubulaire vertical (17), un ou deux manetons (8) à sa partie centrale et antérieure, destinés à être manoeuvrés par des poussoirs (21), Le verrou présentant à chaque extrémité latérale un pene (25) dont un bord coulisse contre le guide de gache (19) correspondant.

9. Timon selon la revendication 8 caractérisé en ce que le verrou (23) peut comporter un dispositif à crémaillère de recentrage régissant ses rapports avec l'axe tubulaire vertical (17) du socle, non représenté, et (ou) des ressorts de rappel de recentrage, non représentés.

10. Timon selon la revendication 1 caractérisé en ce qu'il comporte une petite base (2) non modifiable constituée par le carter du frein à inertie classique (ll) et de deux bras (12) qui y sont fixés latéralement à sa partie antérieure, Ces bras dirigés obliquement en dehors et en avant, symétriquement, étant terminés par des moyens leur permettant de pivoter avec les extrémités antérieures (13) de brancards (4).

11. Timon selon la revendication 10 caractérisé en ce qu'il comporte deux brancards (4), disposés selon un trapèze isocèle, et articulés chacun avec la petite base (2) par des axes verticaux et caractérisés en ce qu'ils sont fixés en arrière au châssis de la remorque sans moyens de pivotement.

12. Timon selon la vendication 11 caractérisé en ce que ces brancards
sont constitués chacun de deux barres de torsion non parallèles, disposés dans un plan vertical et plus proches l'une de l'autre en avant qu'en arrière, Ces barres ayant en commun un axe antérieur vertical pivotant dans un manchon autour duquel elles sont enroulées (6), lequel manchon coopère de façon rigide avec une came (7) dirigée en avant.

13. Timon selon les revendications 8 et 12 caractérisé en ce qu'il comporte de chaque côté un poussoir (21) transmettant au maneton (8) du verrou (23) les mouvements de la came (7) correspondante, ceci ayant pour effet de verrouiller ou de déverrouiller le socle (14) et la glissière (20) selon les rapports réciproques des pertes (25) et des guides de gache (19).

14. Timon selon les revendications précédentes caractérisé en ce qu'il permet au véhicule tracteur et à la remorque de s'articuler sur l'axe tubulaire central (17) pouvant se confondre avec la rotule classique ou bien autour de deux axes antérieurs, selon l'axe de virage, Ceci étant facilité par la résistance élastique qu'opposent les brancards, du fait de leur fixation rigide au châssis de la remorque.

15. Timon selon la revendication 3 caractérisé en ce que le socle (14) comporte une cage d'ancrage (30), Cette cage étant un boîtier vertical qui peut être légèrement pyramidal, et étant destinée à coopérer avec une plaque d'ancrage (29) du véhicule tracteur de préférence verticale et transversale et éventuellement légèrement pyramidale, Cette plaque d'ancrage venant s'insérer dans la cage.

16. Timon selon la revendication 15 caractérisé en ce que la cage et la plaque d'ancrage comportent des moyens pour assurer leur serrage et leur verrouillage réciproques, et faciliter l'attelage et le dételage.

17. Timon selon la revendication 16 caractérisé en ce que les moyens pour assurer le verrouillage de la plaque dans la cage comportent, selon la figure 6 un élément excentrique transversal (32) pivotant en (31) dans la partie inférieure de la cage dont elle occupe toute la largeur, de façon à ménager devant elle un espace suffisant pour l'introduction facile de la plaque d'ancrage (29) et à pouvoir dans un second temps serrer cette plaque contre la paroi de la cage grâce à sa partie saillante, la plaque (29) pouvant comporter une gouttière transversale (35) de rétention et d'extraction, coopérant avec l'arrête saillante de l'élément excentrique (32), le bras (33) de l'élément excentrique (32) coopérant par son axe (36) avec le levier (34) agissant comme pied-de-biche en s'appuyant par son extrémité antérieure (37) sur la partie supérieure de la plaque (29), un verrouillage de sécurité à cliquet de préférence assujettissant le levier (34) non représenté.

18. Timon selon la revendication 16 caractérisé en ce que les moyens pour obtenir le verrouillage de la plaque et de la cage d'ancrage sont constitués par une échancrure (51) de la cage (30) dans sa partie postéro-supérieure, délimitée de chaque côté par une aile (38), ces ailes parallèles et verticales comportant un bord inférieur (39) horizontal au même niveau, cette échancrure étant occupée par le bloc de verrouillage E, Le bloc de verrouillage comportant un élément excentrique (32) transversal pivotant en (50) et se prolongeant en arrière en son milieu par un tube cylindrique (40) perpendiculairement à son grand axe, l'élément excentrique étant percé d'un canal (41) faisant suite à la lumière du tube (40), le tube présentant une glissière bilatérale (42) selon son grand axe, un verrou (44) et son ressort de rappel (49) coulissant dans le canal (41), Le verrou présentant à son extrémité postérieure une broche (45) coulissant de chaque côté dans la glissière (42) du tube (40), l élément excentrique (32) comportant en outre une glissière (47) à axe transversal positionnée transversalement à la racine du tube (40), Un levier de commande (46) comportant à sa partie proximale une pince enserrant en même temps les deux glissières (42) et (47), occupant la glissière (47) avec sa broche (43), et coopérant avec la broche (45) du verrou (44), Cette broche (45) étant capable de coulisser sur le bord inférieur (39) des ailes (38), l'élévation du levier de commande (46), dans un premier temps ayant pour effet d'abaisser conjointement la broche (43) et de reculer la broche (45), grâce au guidage assuré par le bord (39), la libération du verrou (44) s'en suivant, dans un second temps l'élévation du levier de commande (46) par suite du coulissement de la broche (45) sur le bord postérieur des ailes (38) entraînant le pivotement du bloc de verrouillage autour des axes (50) et donc la désolidarisation de la cage (30) et de la plaque d'ancrage (29), une visière (48) prolongeant en avant le bord supérieur de l'élément excentrique (32) en prenant appui sur le bord supérieur de la plaque d'ancrage (29) facilitant le dételage.
